# EUROPÄISCHE PATENTANMELDUNG

(11) **EP 3 886 326 A1**
(43) Veröffentlichungstag der Anmeldung: **29.09.2021**
(21) Anmeldenummer: 20166264.0
(22) Anmeldetag: 27.03.2020
(51) Int. Cl.: H04B 1/00

(54) **FUNK-KOMMUNIKATIONSGERÄT**

(71) Anmelder: Siemens Aktiengesellschaft, 80333 München (DE)
(72) Erfinder: Meyer, Martin, 90425 Nürnberg (DE); Sinn, Ulrich, 91056 Erlangen (DE)

(57) **Zusammenfassung**

Die Erfindung betrifft ein Funk-Kommunikationsgerät mit einem mehrere Anschlüsse (201) umfassenden Transceiver (200) zum Senden bzw. Empfangen von Funksignalen. Außerdem sind mehrere mit dem Transceiver verbundenen Frequenzumsetzer (202) vorgesehen, die Funksignale zwischen dem ersten Frequenzbereich und einem zweiten Frequenzbereich umzusetzen. Zumindest ein Frequenzumsetzer umfasst einen Oszillator (222) sowie eine Umschalteinheit (223), wobei ein Mischer des Frequenzumsetzers über die Umschalteinheit jeweils entweder mit dem Oszillator des Frequenzumsetzers oder mit einem externen Oszillator umschaltbar verbunden ist. Die Umschalteinheit ist mit einem Detektor (224) zur Ermittlung eines externen Oszillatorsignals gekoppelt. Bei Vorliegen eines externen Oszillatorsignals schaltet die Umschalteinheit auf eine Verbindung mit dem externen Oszillator um.

## Beschreibung

Die vorliegende Erfindung betrifft ein Funk-Kommunikationsgerät, das als Basisstation oder auch als Teilnehmerstation eines Funk-Kommunikationssystems insbesondere eines industriellen Automatisierungssystems genutzt werden kann.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden. Eine drahtlose Übermittlung derartiger Daten gewinnt in industriellen Automatisierungssystemen zunehmend an Bedeutung.

Aus US 2005/255821 A1 ist ein Frequenzumsetzer bekannt, der ein Funksignal aus einem ersten Frequenzbereich in einen zweiten Frequenzbereich umsetzt. Der dort beschriebene Frequenzumsetzer ist für eine bidirektionale Umsetzung von digital codierten Daten vorgesehen, die über zwei Trägerfrequenzen übermittelt werden. Insbesondere erfolgt mit dem Frequenzumsetzer eine Umsetzung zwischen dem 2,4-GHz-ISM-Band und dem 5,0-GHz- bis 6,0-GHz-U-NII-Band.

WO 2014/188413 A1 betrifft ein Funk-Kommunikationssystem mit mehreren Funkzellen, das einen Netzwerkknoten umfasst, der eine ausreichende Kapazität zur Kommunikation mit mindestens einem anderen Netzwerkknoten bei einer gegebenen Mittenfrequenz aufweist. Separat vom Netzwerkknoten ist mindestens ein externer Frequenzumsetzer vorgesehen, mittels dessen der Netzwerkknoten mit einem anderen Netzwerkknoten entsprechend einem Funk-Kommunikationsprotokoll, das eine von der gegebenen Mittenfrequenz abweichende Mittenfrequenz vorsieht, Daten austauschen kann.

Funk-Kommunikationssysteme werden üblicherweise nur in bestimmten, zulässigen Frequenzbereichen betrieben. Beispielsweise werden WLAN-Kommunikationssysteme entsprechend IEEE 802.11 a/b/g/n in einem Frequenzbereich bei 2,4 GHz und im 5-GHz-Band genutzt. Komponenten für WLAN-Kommunikationssysteme, insbesondere Basisstationen und Teilnehmerstationen, basieren häufig auf hochintegrierten Schaltkreisen, die nur in genau diesen beiden Frequenzbereichen betrieben werden können. Auf diese Weise lassen sich Produkte mit hohen Stückzahlen preiswert realisieren.

Standards für Funk-Kommunikationssysteme entwickeln sich schnell weiter und ermöglichen beispielsweise eine Nutzung zusätzlicher, bisher nicht vorgesehener Frequenzbereiche oder höhere Sendeleistungen. Entsprechend einer Weiterentwicklung von WLAN-Kommunikationssystemen ist eine Nutzung von Frequenzbereichen bei Frequenzen zwischen ca. 3-4 GHz vorgesehen. Diese Frequenzen sind international bislang nicht einheitlich festgelegt. Zudem unterliegt eine Nutzung der zusätzlichen Frequenzbereiche landesspezifischen Lizenzvergabeverfahren. Insgesamt liegen damit keine günstigen Voraussetzungen für eine Entwicklung hochintegrierter Schaltkreise vor, die in großen Stückzahlen zur Realisierung von WLAN-Komponenten für o.g. zusätzliche Frequenzbereiche genutzt werden können. Darüber hinaus bestehen bei MIMO-Systemen hohe Anforderungen hinsichtlich einer möglichst genauen und einheitlichen Nutzung von Trägerfrequenzen. Insbesondere OFDM-Signale mit unterschiedlichen Trägerfrequenzen können empfängerseitig nicht oder nur mit großem Aufwand demoduliert werden.

Der vorliegenden Erfindung liegt die Aufgabe zugrunde, ein Funk-Kommunikationsgerät zu schaffen, das eine Nutzung zusätzlicher, mitunter landes- bzw. regionalspezifischer Frequenzbereiche ermöglicht und sowohl in einem Einzelantennen-Betrieb (SISO) als auch in einem Mehrantennen-Betrieb (MIMO) genutzt werden kann.

Diese Aufgabe wird erfindungsgemäß durch ein Funk-Kommunikationsgerät mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Funk-Kommunikationsgerät weist einen mehrere Anschlüsse umfassenden Transceiver (Sende- und Empfangseinheit) auf, der dazu ausgestaltet und eingerichtet ist, an den Anschlüssen Funksignale über Trägerfrequenzen in einem ersten Frequenzbereich zu senden bzw. zu empfangen. Außerdem sind mehrere jeweils mit einem Anschluss des Transceivers verbundene Frequenzumsetzer vorgesehen, die jeweils einen Mischer, einen Oszillatorsignaleingang sowie einen Antennenanschluss umfassen und dazu ausgestaltet und eingerichtet sind, Funksignale zwischen dem ersten Frequenzbereich und einem zweiten Frequenzbereich umzusetzen. Die Frequenzumsetzer können insbesondere Transverter sein.

Darüber hinaus umfasst das erfindungsgemäße Funk-Kommunikationsgerät mehrere jeweils mit einem Antennenanschluss eines Frequenzumsetzers verbundene Antennen, die jeweils dazu ausgestaltet und eingerichtet sind, Funksignale über Trägerfrequenzen im zweiten Frequenzbereich zu senden bzw. zu empfangen. Vorzugsweise ist das Funk-Kommunikationsgerät dazu ausgestaltet und eingerichtet, als Basisstation bzw. als Teilnehmerstation eines Funk-Kommunikationssystems betrieben zu werden, das zumindest eine Basisstation und mehrere Teilnehmerstationen umfasst. Insbesondere kann das Funk-Kommunikationsgerät ein WLAN Access Point oder ein WLAN Client sein. Dabei liegt der erste Frequenzbereich beispielsweise bei 2,4 GHz bzw. im 5-GHz-Band, während der zweite Frequenzbereich bei zumindest einer Frequenz zwischen 3,0 GHz und 4,5 GHz liegen kann. Das 5-GHz-Band umfasst insbesondere Trägerfrequenzen zwischen 5,0 GHz und 5,8 GHz wie dies beispielsweise entsprechend IEEE 802.11 a/h/j/n/ac/ax spezifiziert ist.

Erfindungsgemäß umfasst zumindest ein Frequenzumsetzer zusätzlich einen Oszillator sowie eine Umschalteinheit, wobei der Mischer des Frequenzumsetzers über die Umschalteinheit jeweils entweder mit dem Oszillator des Frequenzumsetzers oder mit einem externen Oszillator umschaltbar verbunden ist. Die Umschalteinheit ist mit einem Detektor zur Ermittlung eines externen Oszillatorsignals gekoppelt, der dazu ausgestaltet und eingerichtet ist, die Umschalteinheit bei Vorliegen eines externen Oszillatorsignals auf eine Verbindung mit dem externen Oszillator umzuschalten. Auf diese Weise kann den Mischern der Frequenzumsetzer ein einheitliches Oszillatorsignal zugeführt werden. Vorteilhafterweise sind der Transceiver, die Frequenzumsetzer und die Antennen dadurch dazu ausgestaltet und eingerichtet, in einem MIMO-Betrieb verwendet zu werden.

Für den Transceiver kann auf in hohen Stückzahlen verfügbare WLAN-Chipsätze zurückgegriffen werden, was eine kostengünstige Realisierung des erfindungsgemäßen Funk-Kommunikationsgeräts ermöglicht. Insbesondere können auf dieser Grundlage Funk-Kommunikationsgeräte mit hohen Datenraten realisiert werden wie sie ansonsten von WLAN-Kommunikationsgeräten entsprechend IEEE 802.11 n oder IEEE 802.11 ac bekannt sind.

Entsprechend einer vorteilhaften Ausgestaltung der vorliegenden Erfindung ist der externe Oszillator einem anderen Frequenzumsetzer zugeordnet, der einen Oszillatorsignalausgang aufweist. Vorzugsweise umfassen sämtliche Frequenzumsetzer jeweils zusätzlich einen Oszillator sowie eine Umschalteinheit. Auf diese Weise können sämtliche Antennen sowohl im MIMO-Betrieb (multiple-input multiple-output) als auch im SISO-Betrieb (single-input single-output) im zweiten Frequenzbereich genutzt werden.

Sämtliche Frequenzumsetzer weisen entsprechend einer besonders bevorzugten Ausgestaltung des erfindungsgemäßen Funk-Kommunikationsgeräts jeweils einen Oszillatorsignalausgang auf und sind jeweils dazu ausgestaltet und eingerichtet, dass genau ein Frequenzumsetzer zur Bereitstellung seines Oszillatorsignals an sämtliche anderen Frequenzumsetzer ausgewählt wird. Damit ist sichergestellt, dass sämtlichen Mischern im MIMO-Betrieb dasselbe Oszillatorsignal zugeführt wird.

Vorzugsweise sind die Mischer jeweils dazu ausgestaltet und eingerichtet, Funksignale zwischen dem ersten Frequenzbereich und dem zweiten Frequenzbereich auf Basis eines jeweils zugeführten Oszillatorsignals umzusetzen. Insbesondere sind die Frequenzumsetzer vorteilhafterweise jeweils dazu ausgestaltet und sind, Funksignale bidirektional zwischen dem ersten Frequenzbereich und dem zweiten Frequenzbereich umzusetzen. Beispielsweise können die Frequenzumsetzer dabei jeweils einen Umschalter zwischen einem Sendebetrieb und einem Empfangsbetrieb umfassen. Somit ist ein zuverlässiger bidirektionaler Sende- und Empfangsbetrieb sichergestellt.

Die vorliegende Erfindung wird nachfolgend an einem Ausführungsbeispiel anhand der Zeichnung näher erläutert. Es zeigt
- Figur 1: Funk-Kommunikationssystem für ein industrielles Automatisierungssystem mit einem WLAN Access Point und mehreren WLAN Clients,
- Figur 2: eine schematische Darstellung eines Aufbaus eines WLAN Access Points oder WLAN Clients entsprechend Figur 1.

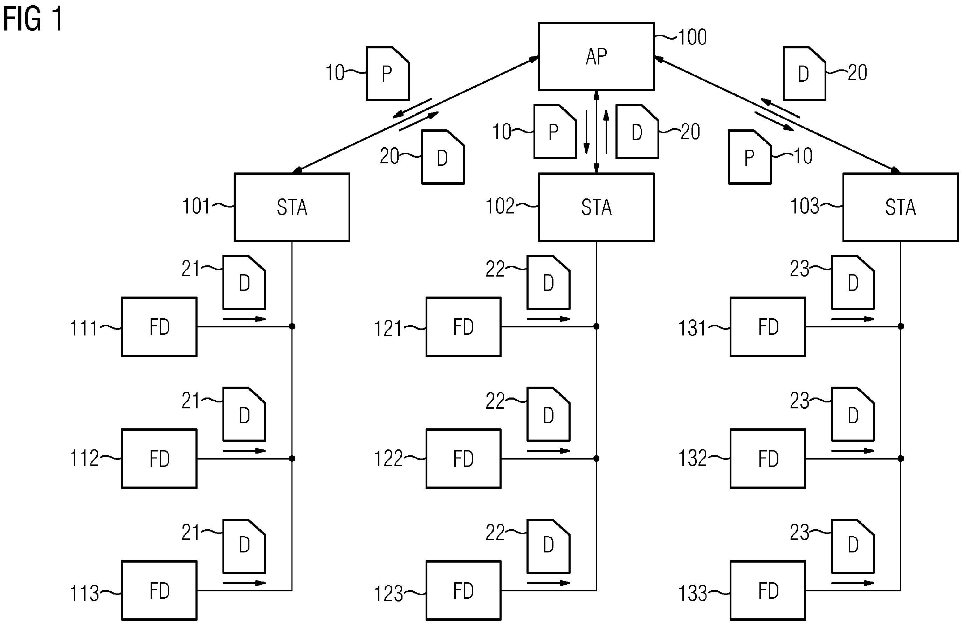

Das in Figur 1 dargestellte Funk-Kommunikationssystem umfasst einen WLAN Access Point 100 als Funk-Basisstation und mehrere drahtlos mit diesem verbindbare WLAN Clients 101-103 als Funk-Teilnehmerstationen. An die WLAN Clients 101-103 sind im vorliegenden Ausführungsbeispiel jeweils mehrere Automatisierungs- bzw. Feldgeräte 111-113, 121-123, 131-133 eines industriellen Automatisierungssystems angeschlossen. Zu Automatisierungsgeräten zählen insbesondere speicherprogrammierbaren Steuerungen, Eingabe/Ausgabe-Einheiten (I/O-Module) oder Bedien- und Beobachtungsstationen des industriellen Automatisierungssystems.

Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung und einem mit der speicherprogrammierbaren Steuerung verbundenen Sensor bzw. einer gesteuerten Maschine oder Anlage. Ein Sensor bzw. eine Maschine oder Anlage kann grundsätzlich auch über das Funk-Kommunikationssystem mit einer speicherprogrammierbaren Steuerung verbunden werden. Die Zentraleinheit einer speicherprogrammierbaren Steuerung ist insbesondere für eine Ermittlung geeigneter Steuerungsgrößen aus erfassten Messgrößen vorgesehen. Obige Komponenten einer speicherprogrammierbaren Steuerung können beispielsweise über ein Rückwandbus-System miteinander verbunden werden.

Eine Bedien- und Beobachtungsstation dient insbesondere zur Visualisierung von Prozessdaten bzw. Mess- und Steuerungsgrö-ßen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Insbesondere sind der WLAN Access Point 100 einerseits und die WLAN Clients 101-103 andererseits dafür ausgestaltet und eingerichtet, miteinander Datenrahmen 10, 20 auszutauschen. Die Datenrahmen 10, 20 können einerseits Polling-Nachrichten 10 und andererseits mittels der Polling-Nachrichten 10 durch den WLAN Access Point 100 von den WLAN Clients 101-103 abgefragte Steuerungsdaten 20 umfassen, insbesondere Prozessdaten bzw. Mess- und Steuerungsgrößen, die mit den WLAN Clients 101-103 verbundenen Steuerungen, Aktoren, Sensoren, Maschinen oder Anlagen zugeordnet sind.

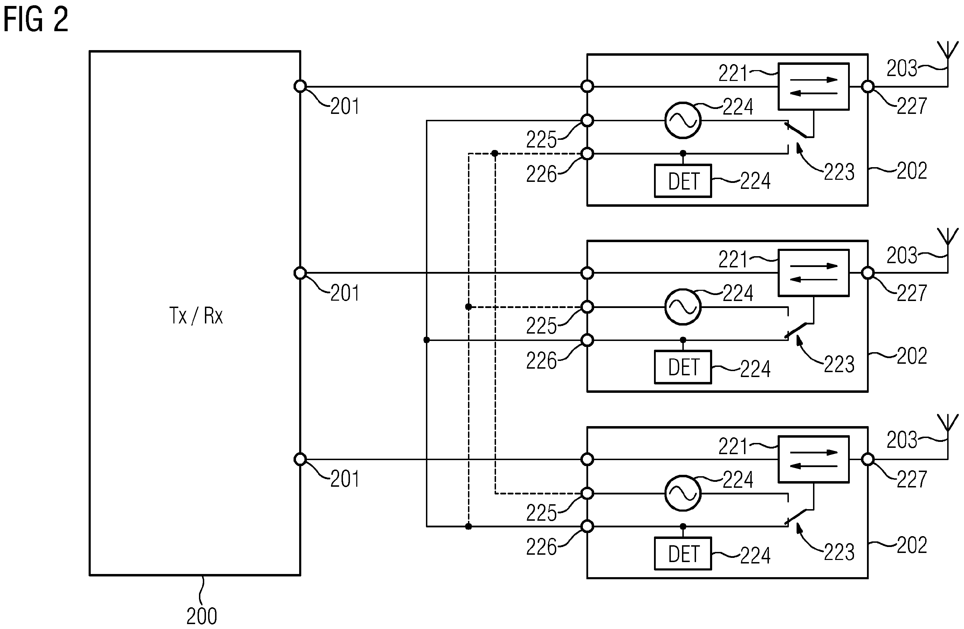

Im vorliegenden Ausführungsbeispiel können sowohl der WLAN Access Point 100 als auch die WLAN-Clients 101-103 wahlweise im MIMO-Modus (multiple-input multiple-output) als auch im SISO-Modus (single-input single-output) betrieben werden. Grundsätzlich basieren der WLAN Access Point 100 und die WLAN-Clients 101-103 auf üblichen WLAN-Geräten, die in einem Frequenzbereich bei 2,4 GHz bzw. im 5-GHz-Band Funksignale senden und empfangen. Diese Funktion wird jeweils durch einen in Figur 2 dargestellten Transceiver 200 abgedeckt, der dazu ausgestaltet und eingerichtet ist, an seinen Anschlüssen 201 Funksignale über Trägerfrequenzen in einem ersten Frequenzbereich, der bei 2,4 GHz bzw. im 5-GHz-Band liegt, zu senden und zu empfangen.

Der WLAN Access Point 100 und die WLAN-Clients 101-103 weisen jeweils mehrere Antennen 203 auf, mittels derer Funksignale über Trägerfrequenzen in einem zweiten Frequenzbereich gesendet und empfangen werden. Dieser zweite Frequenzbereich liegt vorzugsweise bei zumindest einer Frequenz zwischen 3,0 GHz und 4,5 GHz. In Deutschland beispielweise können nach entsprechender Lizenzeinräumung Trägerfrequenzen in einem Bereich bei 3,7 bis 3,8 GHz genutzt werden. Auch in anderen Ländern ist dies möglich. Allerdings weichen dort nutzbare Trägerfrequenzen von o.g. Bereich ab.

Entsprechend Figur 2 ist pro Antenne 203 bzw. pro Anschluss 201 des Transceivers 200 ein Frequenzumsetzer bzw. Transverter 202 vorgesehen. Die Transverter 202 sind jeweils mit einem Anschluss 201 des Transceivers 200 sowie mit einer Antenne 203 verbunden und umfassen jeweils einen Mischer 221, einen Oszillator 222, eine Umschalteinheit 223, einen Oszillatorsignalausgang 225, einen Oszillatorsignaleingang 226 sowie einen Antennenanschluss 227. Die Mischer 221 sind dabei jeweils sowohl mit einem Anschluss 201 des Transceivers 200 als auch mit einem Antennenanschluss 227 des jeweiligen Transverters 202 verbunden und dazu ausgestaltet und eingerichtet, Funksignale zwischen dem ersten Frequenzbereich und einem zweiten Frequenzbereich auf Basis eines jeweils zugeführten Oszillatorsignals bidirektional umzusetzen. Für eine birektionale Umsetzung umfassen die Mischer 221 jeweils einen Umschalter zwischen einem Sendebetrieb und einem Empfangsbetrieb. Unabhängig von der im vorliegenden Ausführungsbeispiel dargestellten Anzahl von Antennen und Transvertern sind grundsätzlich zumindest 2 Antennen und Transverter zur Umsetzung des erfindungsgemäßen Konzepts erforderlich.

Ein Oszillator 222 umfasst beispielsweise eine Referenzfrequenzquelle, insbesondere einen im niedrigen MHz-Bereich betriebenen, einem spannungsgesteuerten Oszillator, dessen Frequenz abhängig von einem Betrag einer anliegenden Spannung im GHz-Bereich variiert werden kann, und einem Regelungskreis, insbesondere einen PLL-Regelungskreis. Mittels des Regelungskreises wird eine gewünschte Frequenz eingestellt.

Die Mischer 221 der Transverter 202 sind über die jeweilige Umschalteinheit 223 entweder mit dem Oszillator 222 des jeweiligen Transverters 202 oder mit einem externen Oszillator umschaltbar verbunden. Im vorliegenden Ausführungsbeispiel ist der externe Oszillator jeweils ein Oszillator 222 eines anderen Transverters 202. Hierzu sind die Oszillatorsignalausgänge 225 der Transverter 202 jeweils mit den Oszillatorsignaleingängen 226 der anderen Transverter 202 verbunden wie dies in Figur 2 durch strichlierte Verbindungen angedeutet ist.

Jede Umschalteinheit 223 ist jeweils mit einem Detektor 224 zur Ermittlung eines externen Oszillatorsignals gekoppelt, der dazu vorgesehen ist, die Umschalteinheit 223 bei Vorliegen eines externen Oszillatorsignals auf eine Verbindung mit dem externen Oszillator umzuschalten. Im vorliegenden Ausführungsbeispiel sind die Transverter 202 dafür konfiguriert, dass genau ein Transverter 202 zur Bereitstellung seines Oszillatorsignals an sämtliche anderen Transverter 202 ausgewählt wird. Der ausgewählte Transverter 202 kann beispielsweise der Transverter 202, der an einen ersten Anschluss 201 des Transceivers 200 angeschlossen ist. Auf diese Weise ist für den MIMO-Modus sichergestellt, dass sämtliche Transverter 202 mit einheitlichen Trägerfrequenzen bzw. phasenstarr arbeiten, so dass gesendete Funksignale empfängerseitig problemlos demoduliert werden können. Zudem muss für den MIMO-Modus nur an einem Transverter 202 ein gewünschter Funkkanal eingestellt werden.

## Patentansprüche

1. Funk-Kommunikationsgerät mit
- einem mehrere Anschlüsse (201) umfassenden Transceiver (200), der dazu ausgestaltet und eingerichtet ist, an den Anschlüssen Funksignale über Trägerfrequenzen in einem ersten Frequenzbereich zu senden und/oder zu empfangen,
- mehreren jeweils mit einem Anschluss des Transceivers verbundenen Frequenzumsetzern (202), die jeweils einen Mischer (221), einen Oszillatorsignaleingang (226) sowie einen Antennenanschluss (227) umfassen und dazu ausgestaltet und eingerichtet sind, Funksignale zwischen dem ersten Frequenzbereich und einem zweiten Frequenzbereich umzusetzen,
- mehreren jeweils mit einem Antennenanschluss eines Frequenzumsetzers verbundenen Antennen (203), die jeweils dazu ausgestaltet und eingerichtet sind, Funksignale über Trägerfrequenzen im zweiten Frequenzbereich zu senden und/oder zu empfangen,
- wobei zumindest ein Frequenzumsetzer zusätzlich einen Oszillator (222) sowie eine Umschalteinheit (223) umfasst und der Mischer des Frequenzumsetzers über die Umschalteinheit jeweils entweder mit dem Oszillator des Frequenzumsetzers oder mit einem externen Oszillator umschaltbar verbunden ist,
- wobei die Umschalteinheit mit einem Detektor (224) zur Ermittlung eines externen Oszillatorsignals gekoppelt ist, der dazu ausgestaltet und eingerichtet ist, die Umschalteinheit bei Vorliegen eines externen Oszillatorsignals auf eine Verbindung mit dem externen Oszillator umzuschalten.

2. Funk-Kommunikationsgerät nach Anspruch 1,
bei dem der externe Oszillator einem anderen Frequenzumsetzer zugeordnet ist, der einen Oszillatorsignalausgang aufweist.

3. Funk-Kommunikationsgerät nach Anspruch 2,
bei dem sämtliche Frequenzumsetzer jeweils zusätzlich einen Oszillator sowie eine Umschalteinheit umfassen.

4. Funk-Kommunikationsgerät nach Anspruch 2 oder 3,
bei dem sämtliche Frequenzumsetzer jeweils einen Oszillatorsignalausgang aufweisen und bei dem die Frequenzumsetzer jeweils dazu ausgestaltet und eingerichtet sind, dass genau ein Frequenzumsetzer zur Bereitstellung seines Oszillatorsignals an sämtliche anderen Frequenzumsetzer ausgewählt wird.

5. Funk-Kommunikationsgerät nach einem der Ansprüche 1 bis 4, bei dem die Mischer jeweils dazu ausgestaltet und eingerichtet sind, Funksignale zwischen dem ersten Frequenzbereich und dem zweiten Frequenzbereich auf Basis eines jeweils zugeführten Oszillatorsignals umzusetzen.

6. Funk-Kommunikationsgerät nach einem der Ansprüche 1 bis 5, bei dem die Frequenzumsetzer jeweils dazu ausgestaltet und eingerichtet sind, Funksignale bidirektional zwischen dem ersten Frequenzbereich und dem zweiten Frequenzbereich umzusetzen.

7. Funk-Kommunikationsgerät nach Anspruch 6,
bei dem die Frequenzumsetzer jeweils einen Umschalter zwischen einem Sendebetrieb und einem Empfangsbetrieb umfassen.

8. Funk-Kommunikationsgerät nach einem der Ansprüche 1 bis 7,
bei dem das Funk-Kommunikationsgerät dazu ausgestaltet und eingerichtet ist, als Basisstation und/oder als Teilnehmerstation eines Funk-Kommunikationssystems betrieben zu werden, das zumindest eine Basisstation und mehrere Teilnehmerstationen umfasst.

9. Funk-Kommunikationsgerät nach Anspruch 8,
bei dem das Funk-Kommunikationsgerät ein WLAN Access Point oder ein WLAN Client ist.

10. Funk-Kommunikationsgerät nach Anspruch 8 oder 9,
bei dem der erste Frequenzbereich bei 2,4 GHz und/oder im 5-GHz-Band liegt und bei dem der zweite Frequenzbereich bei zumindest einer Frequenz zwischen 3,0 GHz und 4,5 GHz liegt.

11. Funk-Kommunikationsgerät nach einer der Ansprüche 1 bis 10,
bei dem der Transceiver, die Frequenzumsetzer und die Antennen dazu ausgestaltet und eingerichtet sind, in einem MIMO-Betrieb verwendet zu werden.
